## Europäisches Patentamt

## European Patent Office

## Office européen des brevets

(11) Veröffentlichungsnummer: **0 096 378**
**B1**

(12) **EUROPÄISCHE PATENTSCHRIFT**

(45) Veröffentlichungstag der Patentschrift:
30.04.86

(21) Anmeldenummer: 83105476.2

(22) Anmeldetag: 02.06.83

(51) Int. Cl.⁴: **A 22 C 11/02**

(54) **Verfahren und Anordnung zum automatisierten Herstellen von Würsten im Strang.**

(30) Priorität: 02.06.82 DE 3220640
25.06.82 DE 3223725

(43) Veröffentlichungstag der Anmeldung:
21.12.83 Patentblatt 83/51

(45) Bekanntmachung des Hinweises auf die Patenterteilung:
30.04.86 Patentblatt 86/18

(84) Benannte Vertragsstaaten:
AT BE CH DE FR GB IT LI NL SE

(56) Entgegenhaltungen:
EP - A - 0 013 552
EP - A - 0 068 578
CH - A - 442 125
DE - A - 2 249 070
DE - A - 2 941 872
DE - B - 1 187 947
FR - A - 1 483 818
FR - A - 2 005 807
FR - A - 2 343 427
NL - A - 7 900 232
US - A - 3 055 246
US - A - 3 207 368

(73) Patentinhaber: Teepak Produktie N.V., Industriepark 17,
B-3900 Lommel (BE)

(72) Erfinder: Kollross, Günter, Am Wallerstädter Weg 20,
D-6080 Gross Gerau-Dornheim (DE)
Erfinder: Steinbis, Fritz Karl, Helwigstrasse 64,
D-6080 Gross Gerau-Dornheim (DE)

(74) Vertreter: Weber, Dieter, Dr. et al, Dr. Dieter Weber und
Klaus Seiffert Patentanwälte
Gustav-Freytag-Strasse 25 Postfach 6145,
D-6200 Wiesbaden 1 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

## Beschreibung

Die Erfindung betrifft ein Verfahren zum automatisierten Herstellen von Würsten im Strang auf einer Wurstfüllmaschine unter Verwendung von Schlauchmaterial für die Wursthüllen, welches zunächst neben der Füllmaschine von einer Vorratsrolle in größeren Längen abgezogen, axial zusammengerafft und abgetrennt wird, woraufhin ein jeder solcher Abschnitt an den Brätausstoß der Füllmaschine überführt und unter gebremstem Abzug von einem Füllrohr portionsweise mit Brät gefüllt, abgeteilt und verschlossen wird, sowie eine Anordnung zur Durchführung eines solchen Verfahrens.

Ein Verfahren der vorgenannten Art ist aus der DE-A 29 41 872 bekannt. Das bekannte Verfahren hat gegenüber der "klassischen" Methode des Bezugs fertig geraffter Schlauchabschnitte - sogenannter "Schlauchraupen" - von den Schlauchfabriken eine Reihe beträchtlicher Vorteile für den Wursthersteller:

- das in großen Längen auf Rollen aufgespulte Schlauchmaterial nimmt für die Lagerung weitaus weniger platz in Anspruch als fertiggeraffte Schlauchraupen;

- das bis zur Anlieferung an den Wursthersteller ungewässert gebliebene Schlauchmaterial ist in jedem Falle keimfrei und kann in trockenen Räumen auch über längere Zeitabschnitte ohne die Gefahr der Verseuchung mit Bakterien gelagert werden;

- die Wässerung des Schlauchmaterials zur Erzielung des zum Raffen und Füllen erforderlichen Feuchtigkeitsgehalts geht bei ungerafftem Material viel schneller vonstatten als bei den dichtgerafften Schlauchraupen und läßt sich deshalb auch im Durchlauf vornehmen;

- es entfällt die praktisch nur von Hand durchführbare Entfernung der Verpackung der einzelnen Schlauchraupen in Schlauchhüllen oder -netzen;

- die Verbringung der erst unmittelbar vor dem Füllen gerafften Raupen vor den Brätausstoß der Füllmaschine läßt sich mechanisieren, wodurch weitere Arbeitskraft gespart und die Gefahr der Beschädigung des Schlauchmaterials beim Bestücken der Füllrohre von Hand vermieden wird;

- da auch hierbei das Raffen mechanisch durchführbar ist, läßt sich das gesamte "Raff-Füll-Clip"-Verfahren automatisieren und rationalisieren.

Dennoch kann bei dem bekannten Verfahren noch nicht vollständig auf eine Hilfskraft verzichtet werden. Unvermeidbare Toleranzen in den Abmessungen und der Dehnbarkeit des Schlauchmaterials ebenso wie Toleranzen in den gerafften Abschnittslängen machen eine ständige Überwachung des Materialabzugs am Füllrohr und das echtzeitige Abschalten der Füllmaschine von Hand erforderlich, enn nicht größere ungefüllte Restlängen an Schlauchmaterial zur Vermeidung einer "Füllung ins Leere" mit deren verheerenden Folgen in Kauf genommen werden soll.

Aufgabe der Erfindung ist es, den Nachteil zu vermeiden und das Verfahren der eingangs genannten Art dahingehend zu verbessern, daß unter weitestgehender Ausnutzung der abschnittsweise gerafften Schlauchlängen eine völlige Automatisierung ohne menschliche Hilfskraft durchgeführt wird.

Erfindungsgemäß wird diese Aufgabe dadurch gelöst, daß beim Riffen die Länge des Schlauchabschnitts beim Abziehen von der Vorratsrolle fortlaufend gemessen und die Endlänge des gerafften und abgetrennten Schlauchabschnitts gespeichert wird, daß ferner die Länge des beim Füllen vom Füllrohr abgezogenen Schlauchmaterials fortlaufend gemessen und mit der gespeicherten Länge des gleichen Schlauchabschnitts verglichen wird und daß das Füllen, Abteilen und Verschließen in Abhängigkeit von diesem Vergleich unterbrochen wird.

Gemäß der Erfindung wird also das Ergebnis der Messung der Materiallänge in einem jeden gerafften Schlauchabschnitt ständig als Vergleichsgröße bei der späteren Verarbeitung der zuvor gemessenen Schlauchabschnitte auf der Füllmaschine herangezogen und dadurch eine größtmögliche Ausnutzung des Schlauchmaterials mit einem Minimum an Abfall ermöglicht, wobei die Messung des Schlauchabzugs vom Füllrohr vor der Bremsstelle, wo das Material noch nicht dem Innendruck durch das eingefüllte Wurstbrät unterworfen ist, Verfälschungen des Vergleichs der Längenmessungen durch die Materialdehnung beim Füllen ausschließt.

In vorteilhafter Ausgestaltung der Erfindung wird die beim Raffen von der Vorratsrolle abgezogene Schlauchlänge fortlaufend mit einer vorgegebenen Abschnittslänge verglichen, die wenigstens näherungsweise so bestimmt wird, daß sie einem geradzahligen Vielfachen der für eine bestimmte Füllmenge einer Wurst bei gegebenem Schlauchkaliber benötigten Schlauchlänge entspricht. Diese Maßnahme begünstigt nicht nur zusätzlich die angestrebte hohe Ausnutzung des Schlauchmaterials, sondern erleichtert auch die Umstellung beim Übergang auf andere Füllmengen.

Vor allem für kleinere Würste wie Brühwürstchen oder dergleichen, die sämtliche dasselbe Füllgewicht aufweisen sollen, läßt sich das erfindungsgemäße Verfahren mit Vorteil so durchführen, daß das Füllen Einschnüren und Verschließen unterbrochen wird, wenn der Vergleich des vom Füllrohr abgezogenen Schlauchmaterials mit der Länge des gerafften Schlauchabschnitts ergibt, daß der auf dem Füllrohr vorhandene Materialrest zum nochmaligen Einfüllen der bestimmten Füllmenge unzureichend ist.

Die bei dieser Verfahrensweise ggf. übrgibleibenden Restlängen an ungefüllten Schlauchmaterial sind in jedem Falle so klein und unbedeutend, daß sie, gemessen an der Gesamtlänge eines jeden Schlauchabschnitts in Kauf genommen werden können.

Bei größeren Würsten vor allem für Aufschnittware wird es hingegen vorteilhafter sein, nach einem anderen Ausgestaltungsmerkmal der Erfindung das Verfahren so durchzuführen, daß die Füllmenge beim letzten Füllvorgang eines jeden Schlauchabschnitts entsprechend der sich bei dem Vergleich ergebenden Restlänge des Schlauchmaterials auf dem Füllrohr verringert wird. Die somit verkürzte letzte Wurst eines jeden Schlauchabschnitts kann dann ggf. zu einem niedrigeren preis weiterverkauft werden oder sie wird beim Wursthersteller selbst zu Aufschnitt weiter verarbeitet.

Ein besonderer Vorteil des erfindungsgemäßen Verfahrens besteht darin, daß die je Schlauchabschnitt zu raffende Schlauchlänge nicht fest vorgegeben sein muß. Das erfindungsgemäße Verfahren läßt sich vielmehr nach einem besonderen Ausgestaltuncsmerkmal so durchführen, daß die vorgegebene Abschnittslänge für das Raffen durch ständiges Messen der bei der bestimmten Füllmenge einer Wurst infolge Kaliberschwankungen und/oder Dehnbarkeitsänderungen des Schlauchmaterials tatsächlich benötigten Schlauchlänge fortlaufend korrigiert wird.

Die Erfindung gestattet darüberhinaus auch eine automatisierte Überwachung von Klebestellen im Schlauchmaterial, die nicht nur aus optischen Gründen, sondern vor allem wegen ihrer verminderten Festigkeit gegenüber dem Fülldruck ausgesondert werden müssen, was bisher gleichfalls eine visuelle Kontrolle durch eine Bedienungsperson erforderte. Dieses problem wird nach einem besonderen Ausgestaltungsmerkmal der Erfindung dadurch gemeistert, daß das von der Vorratsrolle abgezogene Schlauchmaterial ständig auf das Auftreten einer Klebestelle hin überwacht wird und daß der Raffvorgang selbsttätig beendet und der geraffte Schlauchabschnitt abgetrennt und vor dem Brätausstoßder Füllmaschine verbracht wird, bevor die Klebestelle in den Raffbereich gelangt ist. Die sich beim Auftreten einer Klebestelle ergebende kürzere Materiallänge in dem vor der Klebestelle geraffte Schlauchabschnitt wird dank dem erfindungsgemäßen Verfahren selbsttätig beim Füllen berücksichtigt und führt auch hier zu einer rechtzeitigen Unterbrechung der Füll-, Abteil- und Verschließvorgänge.

Auch für diesen Fall des Auftretens einer Klebestelle braucht der Verfahrensablauf nicht unterbrochen zu werden. Vielmehr wird das Verfahren dann vorteilhaft so betrieben, daß das Abziehen und Raffen des Schlauchmaterials von der Vorratsrolle nach dem Verbringen des vor der Klebestelle abgetrennten Schlauchabschnitts vor den Brätausstoß der Füllmaschine selbsttätig fortgesetzt wird und daß der Raffvorgang erneut beendet und das Schlauchmaterial erneut abgetrennt wird, wenn die Klebestelle die Abtrennstelle passiert hat, woraufhin der die Klebestelle enthaltende Schlauchabschnitt ausgesondert wird und das Verfahren mit dem nachfolgenden Schlauchmaterial normal fortgesetzt wird

Die Aussonderung des die Klebestelle enthaltenden Materialabschnitts kann auf verschiedenste Weise erfolgen und läßt sich mit herkömmlichen Mitteln ohne weiteres automatisieren.

Um auch beim Auftreten von Klebestellen vor allem bei der Herstellung längerer Würste zu vermeiden, daß am Ende eines aus solchen Würsten bestehenden Wurststranges ein längerer ungefüllter Schlauchabschnitt verbleibt bzw. eine verkürzte Wurst gefüllt werden muß, sieht noch ein weiteres Ausgestaltungsmerkmal der Erfindung vor, daß die Überwachung der Klebestelle in einem Abstand vor der Abtrennstelle erfolgt, der grösser als die für die bestimmte Füllmenge einer Wurst erforderliche Schlauchlänge ist, und daß der Raffvorgang beendet und das geraffte Material abgetrennt und vor dem Brätausstoß der Füllmaschine verbracht wird, sobald das größtmögliche ganzzahlige Vielfache der für eine bestimmte Füllmenge einer Wurst bei gegbenem Schlauchkaliber benötigte Schlauchlänge vor Eintritt der Klebestelle in den Raffbereich erreicht ist.

Ausgehend von der bekannten Anordnung nach der DE-A 29 41 872 mit einer Halterung zur drehbaren Lagerung einer Schlauchmaterial-Vorratsrolle, einer Vorrichtung zum abschnittsweisen axialen Raffen des von der Vorratsrolle ablaufenden Schlauchmaterials, einer Vorrichtung zum Abtrennen der gerafften Schlauchabschnitte von dem ungerafften Materialstrang, einer Vorrichtung zum Überführen der gerafften und abgetrennten Schlauchabschnitte an den Brätausstoß einer Wurstfüllmaschine mit mindestens einem einen gerafften Schlauchabschnitt aufnehmenden Füllrohr, mit einer beim Füllen wirksamen Darmbremse, einer vor dem Füllrohrende angeordneten Vorrichtung zum Abteilen und Verschließen des von der Füllmaschine portionsweise mit Brät gefüllten Schlauchmaterials sowie Steuer- und Verriegelungsmitteln für eine programmierte Folgesteuerung der einzelnen Vorrichtungen.

Weitere Merkmale zur vorteilhaften Ausgestaltung einer solchen Anordnung zur Durchführung des erfindungsgemäßen Verfahrens ergeben sich aus den abhängigen Ansprüchen 10 bis 19.

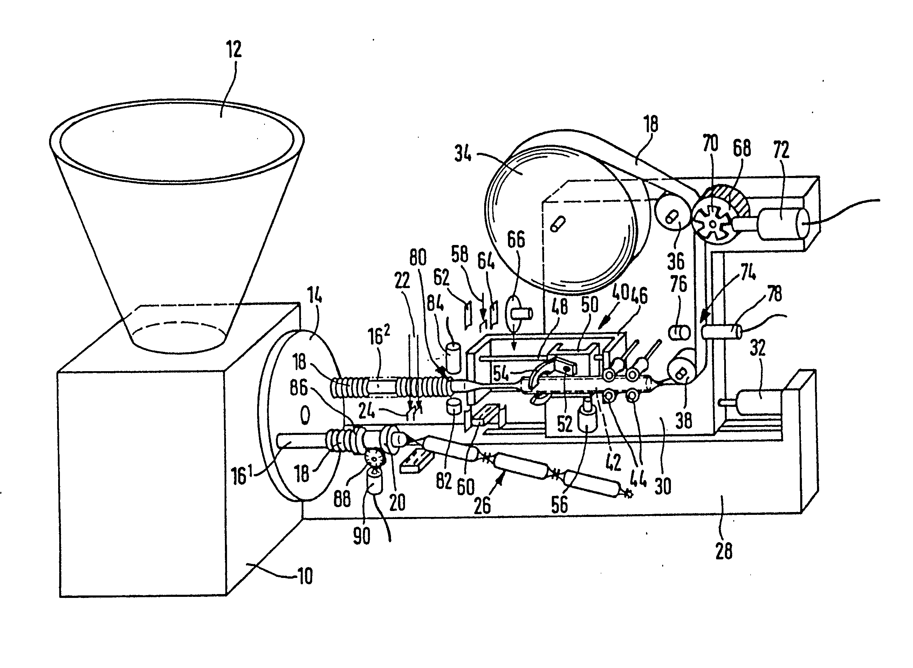

Ein Ausführungsbeispiel einer Anordnung zur Durchführung des erfindungsgemäßen Verfahrens wird nachstehend in Verbindung mit der Zeichnung näher erläutert.

In der Zeichnung ist mit 10 eine Wurstfüllmaschine bezeichnet. Ein Fülltrichter 12 auf der Maschine dient in bekannter Weise zum Einfüllen der Fleischmassen, die in der Maschine zu wurstbrät zerkleinert werden. Seitlich an der Maschine 10 ist eine Revolverscheibe 14 mit zwei zueinander parallelen und identisch ausgebildeten Füllrohren 16¹, 16² angeordnet, die durch Drehen der Scheibe um jeweils 180° mittels eines (nicht gezeigten) Schaltantriebs abwechselnd vor den nicht sichtbaren Brätausstoß der Füllmaschine 10 gebracht werden können. In der Zeichnung befindet sich das vordere Füllrohr 16¹ in "Füllstellung" vor dem Brätausstoß, während das hintere Füllrohr 16² die sogenannte "Ladestellung" einnimmt.

In der Ladestellung wird das Füllrohr 16² in nachstehend beschriebener Weise mit Wursthülle in Gestalt von axial zusammengerafftem Kunstdarm- Schlauchmaterial 18 "geladen", in welches in der Füllstellung das Wurstbrät durch das Füllrohr 16¹ unter Abziehen des darauf vorhandenen Schlauchmaterials eingefüllt wird. Eine sogenannte "Darmbremse" 20, die das Ende des Füllrohrs 16¹ lastisch übergreift, bremst das Abziehen des Schlauchmaterials und stellt dadurch sicher, daß dieses prall mit Wurstbrät gefüllt wird.

Vor dem offenen Ende des Füllrohrs 16¹ ist eine schematisch bei 22 angedeutete Klammersetzvorrichtung zum paarweisen Serzen von metallischen Verschlußklammern 24 angeordnet, mittels welcher der durch das Füllen entstehende Wurststrang 26 in kettenförmig aneinander gereihte Würste unterteilt und zwischen den Würsten verschlossen wird. Ist das auf dem vorderen Füllrohr 16¹ vorhandene Schlauchmaterial verbraucht, wird die Darmbremse 20 in eine das Füllrohr freigebende Stellungbewegt, und die Revolverscheibe 14 wird 180° weitergeschaltet, um das inzwischen "geladene" zweite Füllrohr 16² vor den Brätausstoß der Maschine zu bringen. Nach Zurückschieben der Darmbremse 20 auf das Ende dieses Füllrohrs beginnt der Füllvorgang in vorbeschriebener Weise von neuem, bis auch das darauf vorhandene Schlauchmaterial verbraucht ist, während inzwischen das in Ladestellung befindliche andere Füllrohr erneut mit Schlauchmaterial geladen wird.

Zum Laden des jeweils in Ladestellung befindlichen Füllrohrs dient die nachstehend beschriebene Vorrichtung:

Auf einem an die Füllmaschine 10 anschließenden langgestreckten Führungsbett 28 ist ein Schlittengehäuse 30 parallel zu den Füllrohren 16 verschieblich geführt und kann von einem doppeltwirkendem Kraftzylinder 32 hydraulisch oder pneumatisch zwischen einer - in der Zeichnung links liegenden - "vorgeschobenen" Stellung und einer - in der Zeichnung rechts liegenden "zurückgezogenen" Stellung verschoben werden. Das Schlittengehäuse 30 trägt in einer lösbaren Halterung eine Vorratsspule 34 mit flach aufgewickeltem Kunstdarm - Schlauchmaterial 18, das über Umlenkrollen 36, 38 einer in ihrer Gesamtheit mit 40 bezeichneten Raffeinrichtung koaxial zu dem in Ladestellung befindlichen Füllrohr 16 zugeführt wird. Der Raffeinrichtung ist ein "schwimmendes" Rohrstück 42 von gleichen Durchmesser wie die Füllrohre 16¹, 16² zugeordnet, das zwischen zwei Paaren von Führungsrollen 44 in koaxialer Ausrichtung zu dem in Ladestellung befindlichen Füllrohr 16² geführt ist. Das von der Vorratsspule 34 flach über die Umlenkrollen 36, 38 verlaufende Schlauchmaterial 18 wird von dem Rohrstück 42 auf seinen runden Querschnitt "geöffnet" und vermag dank der freien Drehbarkeit der Führungsrollen 44 zwischen diesen und dem Rohrstück 42 ungehindert hindurchzulaufen.

Die Raffeinrichtung 40 besteht aus einem an dem Schlittengehäuse 30 befestigten U-förmigen Tragrahmen 46, zwischen dessen Schenkeln zwei parallele Führungsstangen 48 angeordnet sind. Auf die Führungsstangen 48 ist ein U-förmiger Schlitten so parallel zu dem Rohrstück 42 verschieblich geführt. Der Schlitten 50 lagert übereinander zwei Wellen 52, an denen an der Vorderseite des Schlittens je ein Greiferhebel mit einer halbringförmigen Greiferbacke 54 befestigt ist. Die beiden Greiferbacken 54 bilden somit gleichsam eine Zange, die durch gegenläufiges Verdrehen der Wellen geöffnet bzw. geschlossen werden kann. Der Schlitten 50 ist mit einem (nicht gezeigten) Antrieb zur Hin- und Herverschiebung auf den Führungsstangen 48 versehen. Ferner befindet sich auf der Rückseite des Schlittens 50 ein (gleichfalls nicht gezeigter) Antrieb für die Greiferbackenwellen, mit welchem eine solche Bewegung der Greiferbacken von der Schlittenbewegung ableitbar ist, daß diese in der rechten Endstellung des Schlittens 50 schließen, während der Verschiebebewegung des Schlittens nach links geschlossen bleiben, in der linken Endstellung öffnen und in geöffnetem Zustand mit dem Schlitten zurückfahren, um dann erneut zu schließen.

Das Innere der Greiferbacken 54 ist mit Reibbelägen versehen, die dem Außendurchmesser des Rohrstücks 42 angepaßt sind, so daß die Greiferbacken 54 in geschlossenem Zustand das über das Rohrstück 42 verlaufende Schlauchmaterial 18 reibschlüssig erfassen, während sie im geöffneten Zustand frei über das Schlauchmaterial hinweggeführt werden können.

Am Schlittengehäuse 30 ist ferner eine Klemmeinrichtung 56 angebracht, mit welcher das Schlauchmaterial 18 gegen das Rohrstück 42 festgeklemmt werden kann, um das Schlauchmaterial 18 und das Rohrstück 42 am Schlittengehäuse 30 festzulegen. Die Klemmeinrichtung 56 kann ein pneumatischer oder hydraulischer Kraftzylinder oder ein Elektromagnet sein, dessen bewegliches Glied einen das Schlauchmaterial beim Betätigen erfassenden Reibbelag trägt.

Der Verschiebeweg des Schlittens 50 auf dem Führungsbett 28 ist so bemessen, daß das Rohrstück 42 in der vorgeschobenen Stellung gegen das in der Ladestellung befindliche Füllrohr 16 bündig anliegt und in der zurückgezogenen Stellung einen größeren Abstand von beispielsweise 100 bis 150 mm zum Füllrohr 16 einnimmt. In diesem Abstandsbereich sind am Führungsbett 28 oberhalb bzw. unterhalb der Bahn des Rohrstücks 42 eine Klammersetzvorrichtung mit einem nur als Pfeil angedeuteten Treiber 58, einer Matrize 60 sowie zwei Paaren von Scherenbacken 62, 64 und ferner eine Trenneinrichtung beispielsweise in Gestalt eines rotierend antreibbaren Schneidmessers 66 befestigt, die im unbetätigten Zustand soweit von der Bahn des Rohrstücks 42 zurückgezogen sind, daß das Schlittengehäuse 30 mit dem geklemmten Rohrstück 42 unbehindert gegen das Füllrohr 16 und die Greiferbacken 54 längs dem Rohrstück 42 und dem Füllrohr 16 hin und her bewegt werden können.

Am Schlittengehäuse 30 ist weiterhin neben der Umlenkrolle 36 eine gegen das darüb geführte Schlauchmaterial unter Federkraft reibschlüssig anstellbare Tastrolle 68 gelagert, die ein Sternrad 70 zur magnetischen Beeinflussung eines elektrischen Meßwertumformers 72 antreibt. Die hierdurch vom Meßwertumformer 72 erzeugten Impulse sind somit ein Vielfaches der Umdrehungen des Sternrades 70 und gestatten durch Zählung eine Längenmessung des von der Vorratsspule 34 beim Laden des Füllrohres 16 abgezogenen Schlauchmaterials.

Ferner befindet sich am Schlittengehäuse 30 zwischen den Umlenkrollen 36 und 38 eine Klebestellen-Uberwachungseinrichtung 74 die beispielsweise aus einer Peleuchtungsquelle 76 und einer Fotozelle 78 besteht und das dazwischen hindurchlaufende Schlauchmaterial 18 auf das Auftreten einer Klebestelle überwacht. Diese Anordnung ist so getroffen, daß die Fotozelle 78 normalerweise von dem Licht der Beleuchtungszelle 76 erregt wird, diese Erregung jedoch unterbrochen wird, wenn eine Klebestelle erscheint.

Eine ähnliche zweite Klebestellen-Überwachungeinrichtung 80 befindet sich unmittelbar hinter der Trenneinrichtung 66, und den Scherenbacken 62, 64 nur mit dem Unterschied, daß die Beleuchtungseinrichtung 82 und die Fotozelle 84 dieser Uberwachungseinrichtung 80 auf derselben Seite des Schlauchmaterials angeordnet sind und hierzu das von der Beleuchtungseinrichtung 82 ausgesandte Licht von der polierten Oberfläche des Füllrohrs 16 zur Fotozelle 84 hin reflektiert wird. Da das Licht hierbei zweimal durch das Schlauchmaterial hindurchtreten muß, ist die Fotozelle 84 entsprechend empfindlicher eingestellt bzw. die Beleuchtungsquelle 82 stärker ausgebildet.

Wie die Zeichnung weiterhin zeigt, ist auf dem in Füllstellung befindlichen Füllrohr, gemäß der Zeichnung dem Füllrohr 16[1], im Abstand zu der Darmbremse 20 ein weiteres ringförmiges Glied 86 vorhanden, durch welches das Schlauchmaterial ebenso wie durch die Darmbremse 20 hindurchläuft. Das ringförmige Glied 86 dient als Rückhalteelement für die Raffalten des auf dem Füllrohr befindlichen Schlauchmaterials, um die Messung der Abzugslänge vor der Darmbremse 20 zu ermöglichen. Diese Messung erfolgt mittels einer das Schlauchmaterial zwischen der Darmbremse 20 und dem Rückhalteelement 86 reibschlüssig erfassenden Tastrolle 88, die ein nicht genauer gezeigtes Sternrad zur magnetischen Beeinflussung eines elektrischen Meßwertumformers 90 antreibt. Die vom Meßwertumformer 90 erzeugten Impulse sind wiederurn ein Vielfaches der Umdrehungen der Tastrolle 88 und gestatten durch Zählung eine Längenmessung des vom Füllrohr beim Füllen abgezogenen Schlauchmaterials.

Zur Ein- und Ausschaltung der Wurstfüllmaschine 10, zum Schalten der Revolverscheibe 14, zur Steuerung des Antriebzylinders der Raffvorrichtung 40 und zur Steuerung der Klammersetzvorrichtungen 22 und 58 bis 64 sind (nicht gezeigt.) elektrisch betätigbare Steuermittel sowie (ebenfalls nicht gezeigte) Verriegelungsmittel vorgesehen, welch letztere dafür sorgen, daß die jeweilige Betätigung nur dann erfolgen kann, wenn der vorhergehende Betätigungsschritt beendet ist und die zu betätigende Vorrichtung betätigungsbereit ist.

Der gesamte Programmablauf der gezeigten Anordnung wird von einam (nicht gezeigten) Mikrocomputer gesteuert und koordiniert, der in gewohnter Weise einen Mikroprozessor sowie programmierbare Nur-Lesespeicher (PROM) und Speicher mit wahlweisen Zugriff (RAM) neben sonstigen üblichen Komponenten eines Mikrocomputers enthält.

An den Mikrocomputer angeschlossen sind außer den vorstehend erwähnten Steuermitteln auch die beiden Meßwertumformer 72 und 90 sowie die Signalemptänger der Klebestellen-Meßeinrichtungen, wie im Beispielsfall die beiden Fotozellen 78 und 84.

Die Wirkungsweise der gezeigten Anordnung unter der Kontrolle des Mikrocomputers ist folgende:

Es sei angenommen, daß die Revolverscheibe 14 mit einem leeren Führungsrohr vor der Raffvorrichtung 40 steht, das Schlittengehäuse 30 die in der Zeichnung rechte Endstelle eingenommen hat, d.h. der Kraftzylinder 32 eingefahren ist, der Schlitten 50 gleichfalls seine rechte Endstellung eingenommen hat und das von der Vorratsrolle 34 kommende Schlauchmaterial über die Umlenkrollen 36 und 38 und zwischen den Führungsrollen 44 hindurch auf das Rohrstück 42 aufgezogen ist, welches seinerseits durch die Klemmeinrichtung 56 am Schlittengehäuse 30 festgelegt ist. Desweiteren sei angenommen, daß sich auf dem anderen Füllrohr, welches sich vor dem Brätausstoß der Wurstfüllmaschine 10 befindet, ein geraffter Schlauchhüllenabschnitt in Gestalt einer Schlauchraupe befindet, deren über die Füllrohrmündung überstehendes Ende mit einer Verschlußklammer verschlossen ist, und daß der Rückhaltering 86 und die Darmbremse 20 auf das vordere Ende dieses Füllrohrs aufgeschoben sind und die Tastrolle 88 reibungsschlüssig gegen den zwischen dem Rückhalteelement 86 und der Darmbremse 20 befindlichen Schlauchabschnitt anliegt.

Wenn nun von dieser Ausgangsstellung aus die Anordnung in Betrieb gesetzt wird bzw. deren Betrieb fortgesetzt wird, gibt der Mikrocomputer zunächst den Befehl für das Steuerventil des Kraftzylinders 32, das Schlittengehäuse 30 mit der Raffvorrichtung 40 nach links zu verfahren, bis das Rohrstück 42 stirnseitig in Anlage gegen das hintere Füllrohr anliegt. Daraufhin wird durch entsprechende Computerbefehle die Klemmeinrichtung 56 gelöst und die Raffvorrichtung 40 eingeschaltet mit der Folge, das die hin- und hergehenden und sich dabei schließenden und wieder öffnenden Greiferbacken 54 Schlauchmaterial 18 von der Vorratsrolle 34 abziehen und in Umfangsfalten axial auf dem hinteren Füllrohr zusammenschieben.

Gleichzeitig mit dem Beginn des Raffvorgangs zählt ein an den Meßwerturnformer 72 innerhalb des Mikrocomputers angeschlossenes Zählwerk die Zählimpulse des Sternrads 70 und vergleicht die daraus errechnete Meterzahl des von der Vorratsrolle 34 abgezogenen Schlauchmaterials mit einer programmierten Soll-Länge für das zu einer Raupe auf dem Füllrohr zusammenzuraffende Material.

Mit dem Beginn des Raffens auf dem hinteren Füllrohr wird die Füllmaschine 10 eingeschaltet und füllt portionenweise Wurstbrät durch das vordere Füllrohr in das dabei von diesem abgezogene Schlauchmaterial. Jedesmal wenn eine vorgegebene Füllmenge erreicht ist, wird dieser Füllvorgang unterbrochen, und es werden der gefüllte Wurststrang durch Einschnüren mit geeigneten Einschnürwerkzeugen abgeteilt und zwei Verschlußklammern 24 gesetzt, woraufhin die Füllmaschine 10 erneut eingeschaltet wird. Die Länge des hierbei von dem vorderen Füllrohr abgezogenen Schlauchmaterials 18 wird ständig von dem Meßumformer 90 erfaßt und dort mit dem Längenmeßergebnis verglichen, das zuvor für diesen Schlauchabschnitt, als er gerafft wurde, von dem Meßwertumformer 72 gemessen worden ist.

Außer der fortgesetzten Längenmessung des vom vorderen Füllrohr abgezogenen Schlauchmaterials erfaßt der Mikrocomputer in Verbindung mit entweder den Einschaltungen der Füllmaschine 10 oder den Auslösungen der Klammersetzvorrichtung 58 bis 64 die Menge an Schlauchmaterial, die für je eine gefüllte Wurst vom vorderen Füllrohr abgezogen wird. Aufgrund dieser Messung errechnet der Mikrprozessor fortwährend die noch zur Verfügung stehende Restlänge an Schlauchmaterial auf dem vorderen Füllrohr und sorgt, je nachdem wie der Mikrocomputer programmiert ist, dafür daß entweder das Füllen, Abteilen und Verschließen beendet wird, wenn nicht mehr genügend Schlauchmaterial auf dem vorderen Füllrohr für eine weitere Wurstlänge vorhanden ist, oder aber der Füllvorgang vorzeitig beendet und ein letztes Mal die Klammersetzvorrichtung 58 bis 64 betätigt wird. Auf diese Weise wird verhindert, daß eine "Füllung ins Leere" erfolgt und gleichzeitig wird der auf dem vorderen Füllrohr enthaltene Schlauchvorrat optimal ausgenutzt.

Wenn der Raffvorgang nach Raffen der vorbestimmten Schlauchmateriallänge beendet ist und die Klammersetzvorrichtung 22 zum letzten Mal den Wurststrang abgeteilt und zwei Verschlußklammern 24 gesetzt hat, ohne daß die Füllmaschine 10 erneut wieder eingeschaltet wird, wird die Klemmvorrichtung 56 betätigt und klemmt das Rohrstück 42 über das Schlauchmaterial 18 am Schlittengehäuse fest. Mieraufhin wird der Kraftzylinder 32 eingefahren und verschiebt das Schlittengehäuse 30 nach rechts, so daß zwischen dem hinteren Füllrohr $16^2$ und dem Rohrstück 42 genügend freier Abstand entsteht, um die Einschnürbacken 62, 64 aufeinander zu zu bewegen, einen Clip mit Hilfe der Klammersetzvorrichtung 58, 60 zu setzen und den somit verschlossenen gerafften Materialabschnitt mit Hilfe des Schneidmessers 66 von dem auf dem Rohrstück 42 befindlichen ungerafften Material abzuschneiden.

Gleichzeitig wird die Darmbremse 20 mit dem Rückhaltering 86 und der Meßeinrichtung 88, 90 vom vorderen Füllrohr wegbewegt, so daß auch dieses zum nachträglichen Verschwenken der Füllrohre durch Drehen der Revolverscheibe 14 um 180° frei ist. Nach dem Drehen der Revolverscheibe befindet sich die Anordnung erneut in der obigen Ausgangsposition, in welcher die Einschnürbacken 62, 64, die Klammersetzvorrichtung 58, 60 und das Schneidmesser 66 ebenfalls ihre Ausgangspositionen eingenommen haben.

Während des Raffens wird die von der Vorratsrolle 34 abgezogene Schlauchlänge ständig von dem Meßwertumformer 72 erfaßt und im Mikrocomputer derart verarbeitet, daß bei Erreichen eines ganzzahligen Vielfachen der für eine einzelne Wurstfüllung erforderliche Schlauchlänge, die einer programmierten Anzahl von Würsten entspricht, der Raffvorgang abgeschaltet wird. Indem diese Messung bei jedem Raffvorgang wiederholt wird, werden Änderungen der für jede wurst benötigten Schlauchlängen, die einmal auf unterschiedlicher Dehnbarkeit des Wursthüllenmaterials und zum anderen unterschiedlichen Kaliberquerschnitten beruhen können, fortlaufend erfaßt und im Wege einer Rückkopplung beim Raffen verwertet. Da derartige Änderungen im allgemeinen nicht sprunghaft auftreten, läßt sich auf diesem Wege eine praktisch l00%-tige Ausnutzung des Schlauchmaterials zur Herstellung von Würsten erzielen.

Falls nun während des Raffens in dem zwischen der Beleuchtungseinrichtung 76 und der Fotozelle 78 hindurchlaufenden Schlauchmaterialstrang 18 eine Klebestelle auftritt, erhält der Mikrocomputer von der Fotozelle 78 ein Signal und errechnet hieraus, wieviel Schlauchmaterial von der Raffvorrichtung noch abgezogen werden kann, ohne daß die Klebestelle in den Bereich der Greiferbacken 54 gelangt. Dabei kann der Raffvorgang auch schon vorher abgeschaltet werden, wenn gerade noch ein ganzzahliges Vielfaches der für eine Wurst erforderlichen Schlauchlänge gerafft worden ist. Nun wird der Raffvorgang beendet, die Klemmvorrichtung 58 betätigt, das Schlittengehäuse 30 vom Kraftzylinder 32 nach rechts verfahren und das Schlauchmaterial mit Hilfe der Abtrenneinrichtung 58 abgetrennt. Hieraufhin wird, genauso wie dies auch beim gewöhnlichen Arbeitsablauf der Fall ist, unter der Voraussetzung, daß auch inzwischen das auf dem anderen Füllrohr vorhandene Schlauchmaterial aufgebraucht und die Darmbremse 20 mit dem Rückhalteriing 88 das Füllrohr freigegeben haben, die Revolverscheibe 14 um 180° gedreht.

Da der Raffvorgang aufgrund der Klebestellen-Uberwachung früher abgeschaltet worden ist, wird das nunmehr vor dem Brätausstoß der Füllmaschine 10 befindliche Schlauchmaterial nur einen Vorrat für eine geringere Anzahl von Würsten enthalten, der aber im Mikrocomputer erfaßt ist und durch die Vergleichsmessung beim anschließenden Füllvorgang nicht überschritten wird.

Inzwischen fährt das Schlittengehäuse 30 mit der Raffvorrichtung erneut gegen das leere Füllrohr und befördert das die Klebestelle enthaltende Schlauchmaterial auf das Füllrohr, bis die Fotozelle 84 feststellt, daß die Klebestelle den Lichtstrahl der Beleuchtungseinrichtung 82 passiert hat und sich damit vollständig auf dem Füllrohrbefindet. Hieraufhin wird nach Zurückfahren des Schlittengehäuses 30 der Materialstrang erneut mit Hilfe des Schneidmessers 86 abgeschnitten, während indessen der Füllvorgang an dem vor dem Brätausstoß der Füllmaschine befindlichen Füllrohr fortgesetzt wird.

Wenn der Füllvorgang beendet ist und hieraufhin die Darmbremse 20 und der Rückhalteriing 88 das vordere Füllrohr freigegeben haben, wird aufgrund einer besonderen Ausbildung des Schaltantriebs für die Revolverscheibe 14 diese zunächst nur um 90° weitergeschaltet und in dieser Stellung der die Klebestelle enthaltende Schlauchabschnitt mit Hilfe einer nicht gezeigten Abstreifvorrichtung von dem Füllrohr abgestreift. Sobald dies geschehen ist, wird die Revolverscheibe 14 erneut betätigt und dadurch wieder ein leeres Füllrohr vor die Raffeinrichtung gebracht. Während nun erneut Schlauchmaterial auf dieses Rohr gerafft wird, muß an dem anderen Füllrohr, welches gleichfalls leer ist, der Füllvorgang für einen Zyklus unterbrochen werden.

Die Steuerung der einzelnen Vorgänge mit Hilfe des Mikrocomputers ist eine reine Frage des Programmierens und kann mit Hilfe fachmännischen Kännens ohne weiteres gelöst werden.

Die Erfindung ist vorstehend im Zusammenhang mit Meßeinrichtungen beschrieben worden, bei denen jeweils ein Meßwertumformer 72 bzw. 90 mit einer Tastrolle 68 bzw. 88 zusammenwirkt. Die Genauigkeit der Längenmessungen kann noch verbessert werden, wenn Schlauchmaterial verwendet wird, welches mit in Längsrichtung in regelmäßigen Abständen angeordneten, beim Durchlauf meßtechnisch erkennbaren Materialiskontinuitäten versehen ist. Dieses Schlauchmaterial ist Gegenstand des europäischen Patentanmeldung 84108849.5, veröffentlicht am 22.5.1985 als EP-A-141 910. Diese können aus einer Längsreihe auf das Schlauchmaterial aufgedruckter Markierungspunkte oder Markierungsstriche bestehen, die von anstelle der Tastrollen 68 und 88 angeordneten Photozellen erfaßt und von einer an die jeweilige Photozelle angeschlossenen Zähleinrichtung gezählt werden können. Der auf dem Schlauchmaterial angeordnete "Maßstab", bestehend aus einer Maßeinteilung ohne Bezugspunkt und Längenangaben, weil es für die Erfindung nur auf das Zählen der Maßeinheiten ankommt, könnte auch durch Materialiskontinuitäten gebildet sein, die sich, wie z.B. kleine Erhebungen, maschinell abtasten lassen: Die Materialiskontinuitäten könnten weiterhin durh Auftrag oder Einschluß eines eine metallische Komponente enthaltenden Materials auf bzw. in das Schlauchmaterial gebildet sein, so daß sie durch magnetische oder elektrische Sensoren erkannt werden können. Grundsätzlich kommt es nur darauf an, daß die die Maßeinteilung bildenden Markierungen auf dem Schlauchmaterial zur Natur des verwendeten Sensors passen und gezählt werden können, während sie am Sensor vorbeigeführt werden. Auf diese Weise ist ein berührungsloses Messen der Schlauchlängenabschnitte möglich.

Es versteht sich, daß z.B. auch eine sich kontinuierlich schraubenförmig um das Schlauchmaterial windende Materialbesonderheit, z.B. in Form eines Farbauftrags, für die beschriebenen Meßzwecke in Frage kommt, weil sich die Schraubenlinie in Längsrichtung gesehen als Materialdiskontinuität darstellt. Deren Wiederholabstand kann z.B. einen Zentimeter oder einige Zentimeter betragen und sollte zweckmäßigerweise höchstens so groß sein, wie die kleinste bestimmungsgemäß mit dem Schlauchmaterial herzustellende Wurstlänge.

Es spielt grundsätzlich keine Rolle, wann die Längenmarkierung an oder auf dem Schlauchmaterial angebracht wird. Wenn zu befürchten ist, daß die Materialdiskontinuitäten auf der Außenseite des Schlauchmaterials beschädigt und dadurch die Messungen gestört werden könnten, besteht die Möglichkeit, Aufdrucke oder sonstige Markierungen an der Schlauchinnenseite oder in einer Längsnaht des Schlauchmaterials zwischen den einander überlappenden Materialschichten anzubringen.

Da die mit einer Maßeinteilung auf dem Schlauchmaterial arbeitende Meßeinrichtung für die Längenmessung die Zahl der Materialdiskontinuitäten zählt, spielt es keine Rolle, ob das Schlauchmaterial an der Meßstelle gedehnt ist oder nicht. Es besteht daher eine größere Freiheit in der Wahl der Anbringung der Sensoren für die Materialdiskontinuitäten. Es könnte z.B. eine Meßeinrichtung mit Sensor in Abzugsrichtung hinter der Darmbremse 20 angeordnet sein.

## Patentansprüche

1. Verfahren zum automatisierten Herstellen von Würsten im Strang auf einer Wurstfüllmaschine unter Verwendung von Schlauchmaterial für die Wursthüllen, welches zunächst neben der Füllmaschine von einer Vorratsrolle in größeren Längen abschnittsweise abgezogen, axial zusammengerafft und abgetrennt wird, woraufhin ein jeder solcher Abschnitt an den Brätausstoß der Füllmaschine überführt und unter gebremstem Abzug von einem Füllrohr portionsweise mit Brät gefüllt, abgeteilt und verschlossen wird, daudurch gekennzeichnet, daß beim Raffen die Länge des Schlauchabschnitts beim Abziehen von der Vorratsrolle fortlaufend gemessen und die Endlänge des gerafften und abgetrennten Schlauchabschnitts gespeichert wird, daß ferner die Länge des beim Füllen vom Füllrohr abgezogenen Schlauchmaterials fortlaufend gemessen und mit der gespeicherten Länge des gleichen Schlauchabschnitts verglichen wird und daß das Füllen, Abteilen und Verschließen in Abhängigkeit von diesem Vergleich unterbrochen wird.

2. Verfahren nach Anspruch 1, dadurch gekennzeichnet, daß die beim Raffen von der Vorratsrolle abgezogene Schlauchlänge fortlaufend mit einer vorgegebenen Abschnittslänge verglichen wird, die wenigstens näherungsweise so bestimmt wird, daß sie einem geradzahligen Vielfachen der für eine bestimmte Füllmenge einer Wurst bei gegebenem Schlauchkaliber benötigten Schlauchlänge entspricht.

3. Verfahren nach Anspruch 2, dadurch gekennzeichnet, daß das Füllen, Einschnüren und Verschließen unterbrochen wird, wenn der Vergleich des vom Füllrohr abgezogenen Schlauchmaterials mit der Länge des gerafften Schlauchabschnitts ergibt, daß der auf dem Füllrohr vorhandene Materialrest zum nochmaligen Einfüllen der bestimmten Füllmenge unzureichend ist.

4. Verfahren nach Anspruch 2, dadurch gekennzeichnet, daß die Füllmenge beim letzten Füllvorgang eines jeden Schlauchabschnitts entsprechend der sich bei dem Vergleich ergebenden Restlänge des Schlauchmaterials auf dem Füllrohr verringert wird.

5. Verfahren nach einem der Ansprüche 2 bis 4, dadurch gekennzeichnet, daß die vorgegebene Abschnittslänge für das Raffen durch ständiges Messen der bei der bestimmten Füllmenge einer Wurst infolge Kaliber- und/oder Elastizitätsschwankungen des Schlauchmaterials tatsächlich benötigten Schlauchmenge fortlaufend korrigiert wird.

6. Verfahren nach einem der Ansprüche 1 bis 5, dadurch gekennzeichnet, daß die Länge der Schlauchabschnitte beim Abziehen von der Vorratsrolle und/oder die Länge des vom Füllrohr abgezogenen Schlauchmaterials durch maschinelles Zählen von in regelmäßigen Längsabständen am Schlauchmaterial angeordneten Materialdiskontinuitäten gemessen werden.

7. Verfahren nach Anspruch 6, dadurch gekennzeichnet, daß berührungslos gemessen wird.

8. Verfahren nach einem der vorhergehenden Ansprüche, dadurch gekennzeichnet, daß das von der Vorratsrolle abgezogene Schlauchmaterial ständig auf das Auftreten einer Klebestelle hin überwacht wird und daß der Raffvorgang selbsttätig beendet wird und der geraffte Schlauchabschnitt abgetrennt und vor den Brätausstoß der Füllmaschine verbracht wird, bevor die Klebestelle in den Raffbereich gelangt ist.

9. Verfahren nach Anspruch 8, dadurch gekennzeichnet, daß das Abziehen und Raffen des Schlauchmaterials von der Vorratsrolle nach dem Verbringen des vor der Klebestelle abgetrennten Schlauchabschnitts vor den Brätausstoß der Füllmaschine selbsttätig fortgesetzt wird und daß der Raffvorgang erneut beendet und das Schlauchmaterial erneut abgetrennt werden, wenn die Klebestelle die Abtrennstelle passiert hat, woraufhin der die Klebestelle enthaltende Schlauchabschnitt ausgesondert wird und das Verfahren mit dem nachfolgenden Schlauchmaterial normal fortgesetzt wird.

10. Verfahren nach Anspruch 8 oder 9, dadurch gekennzeichnet, daß die Überwachung der Klebestelle in einem Abstand von der Abtrennstelle erfolgt, der größer als die für die bestimmte Füllmenge einer Wurst erforderliche Schlauchlänge ist, und daß der Raffvorgang beendet und das geraffte Material abgetrennt und vor den Brätausstoß der Füllmaschine verbracht wird, sobald das größtmögliche ganzzahlige Vielfache der für eine bestimmte Füllmenge einer Wurst bei gegebenem Schlauchkaliber benötigte Schlauchlänge vor Eintritt der Klebestelle in den Raffbereich erreicht ist.

11. Anordnung zur Durchführung des Verfahrens nach einem der vorhergehenden Ansprüche mit einer Halterung zur drehbaren Lagerung einer Schlauchmaterial-Vorratsrolle, einer Vorrichtung zum abschnittsweisen axialen Raffen des von der Vorratsrolle ablaufenden Schlauchmaterials, einer Vorrichtung zum Abtrennen der gerafften Schlauchabschnitte von dem ungerafften Materialstrang, einer Vorrichtung zum Überführen der gerafften und abgetrennten Schlauchabschnitte an den Brätausstoß einer Wurstfüllmaschine mit mindestens einem einen gerafften Schlauchabschnitt aufnehmenden Füllrohr, mit einer beim Füllen wirksamen Darmbremse, einer vor dem Füllrohrende angeordneten Vorrichtung zum Abteilen und Verschließen des von der Füllmaschine portionsweise mit Brät gefüllten Schlauchmaterials sowie Steuer- und Verriegelungsmitteln für eine programmierte Folgesteuerung der einzelnen Vorrichtungen, gekennzeichnet durch eine erste Meßeinrichtung zum fortlaufenden Messen der Länge eines von der Vorratsrolle abgezogenen Schlauchabschnitts während des Raffens, eine zweite Meßeinrichtung zum fortlaufenden Messen der Länge des beim Füllen vom Füllrohr durch die Darmbremse abgezogenen Schlauchmaterials, eine Speichereinrichtung, welche die durch die erste Meßeinrichtung ermittelte Endlänge eines jeden gerafften und abgetrennten Schlauchabschnitts speichert, einen Vergleicher, der die während der Verarbeitung von der zweiten Meßeinrichtung ermittelten Meßwerte fortlaufend mit der gespeicherten Endlänge des gleichen Schlauchabschnitts vergleicht, sowie einen Rechner, der aus dem Vergleich die auf dem Füllrohr zur Verfügung bleibende Materiallänge berechnet und in Abhängigkeit davon die Steuer- und Verriegelungsmittel ansteuert.

12. Anordnung nach Anspruch 11, dadurch gekennzeichnet, daß der Rechner in Bezug auf die Anzahl der mit einer bestimmten Brätmenge und einem gerafften Schlauchabschnitt zu füllenden Würste programmierbar ist und aus den Meßwerten der zweiten Meßeinrichtung und dem Steuerimpulsabstand der Füllmaschine bzw. der Setzvorrichtung die zu raffende Materialmenge bestimmt, bei deren Messung durch die erste Meßeinrichtung der Raffvorgang abgeschaltet und der geraffte Abschnitt abgetrennt und vor den Brätausstoß der Füllmaschine verbracht wird.

13. Anordnung nach Anspruch 11 oder 12, dadurch gekennzeichnet, daß die beiden Längenmeßeinrichtungen Meßwertumformer zur Umsetzung der gemessenen Materiallängen in Zählimpulse enthalten.

14. Anordnung nach Anspruch 13, dadurch gekennzeichnet, daß die beiden Meßwertumformer mit Tastrollen zur reibschlüssigen Mitnahme durch das Schlauchmaterial ausgerüstet sind.

15. Anordnung nach Anspruch 11 oder 12, dadurch gekennzeichnet, daß wenigstens eine der beiden Längenmeßeinrichtungen einen Materialdiskontinuitäten im durchlaufenden Schlauchmaterial erkennenden Sensor sowie einen sie zählenden Zähler enthält.

16. Anordnung nach Anspruch 15, dadurch gekennzeichnet, daß der Sensor mit Zwischenabstand zum Schlauchmaterialangeordnet ist.

17. Anordnung nach Anspruch 15 oder 16, dadurch gekennzeichnet, daß der Sensor eine auf bestimmte optisch wirksame Materialdiskontinuitäten abgestimmte Photozelle ist.

18. Anordnung nach einem der Ansprüche 11 bis 17, dadurch gekennzeichnet, daß der Vergleicher und der Rechner Bestandteile eines Mikrocomputers sind.

19. Anordnung nach einem der vorhergehenden Ansprüche, dadurch gekennzeichnet, daß die Meßeinrichtung für die Messung des Materialabzugs am Füllrohr zwischen der Darmbremse und einem dazu beabstandeten Rückhalteelement für die Rafffalten des auf dem Füllrohr befindlichen Schlauchmaterials angeordnet ist.

20. Anordnung nach Anspruch 19, dadurch gekennzeichnet, daß bei der Verbringung eines neuen gerafften Schlauchmaterialabschnitts vor den Brätausstoß der Füllmaschine das Rückhalteelement und die Meßeinrichtung für den Materialabzug zusammen mit der Darmbremse vom Füllrohr vorübergehend entfernbar sind.

21. Anordnung nach einem der Ansprüche 11 bis 20, gekennzeichnet durch zwei an den Rechner angeschlossene Klebestellen-Überwachungseinrichtungen, von denen die eine vor und die andere unmittelbar hinter der Abtrennvorrichtung angeordnet sind.

22. Anordnung nach Anspruch 21, dadurch gekennzeichnet, daß die erste Klebestellen-Überwachungseinrichtung in einem Abstand vor der Abtrennvorrichtung angeordnet ist, der größer als die größte mit der Anordnung herzustellende Wurstlänge ist.

23. Anordnung nach Anspruch 21 oder 22, dadurch gekennzeichnet, daß die Klebestellen-Überwachungseinrichtungen als photoeleketrische Meßeinrichtungen ausgebildet sind.

24. Anordnung nach Anspruch 21 oder 22, dadurch gekennzeichnet, daß die Klebestellen-Überwachungseinrichtungen als kapazitive Meßeinrichtungen ausgebildet sind.

**Claims**

1. A process for the automated production of sausages in a string on a sausage filling machine using tubular material for the sausage casings, which is initially drawn off beside the filling machine from a supply roll in greater lengths in a portion-wise manner, axially bunched together and cut off, whereupon each such portion is transferred to the meat discharge of the filling machine and filled in portion-wise manner with meat while it is being drawn in a braked mode from a filling tube, divided and closed, characterised in that in the bunching operation the length of the tubular portion is continuously measured as it is drawn from the supply roll and the final length of the bunched and cut-off tubular portion is stored, that in addition the length of the tubular material which is drawn off· the filling tube in the filling operation is continuously measured and compared to the stored length of the same tubular portion, and that the filling, dividing and closing operation is interrupted in dependence on said comparison.

2. A process according to claim 1 characterised in that the tube length which is drawn of the supply roll in the bunching operation is continuously compared to a predetermined portion length which is at least approximately so determined that it corresponds to an even multiple of the tube length required for a given amount for filling a sausage with a predetermined tubular diameter.

3. A process according to claim 2 characterised in that the filling, constricting and closing operation is interrupted when comparison of the tubular material which is drawn from the filling tube, with the length of the bunched tubular portion shows that the residue of material present on the filling tube is insufficient for again introducing the given amount required for filling a sausage.

4. A process according to claim 2 characterised in that the filling amount, in the last filling operation of each tubular portion, is reduced in accordance with the residual length of tubular material on the filling tube, which is found in the comparison operation.

5. A process according to one of claims 2 to 4 characterised in that the predetermined portion length for the bunching operation is continuously corrected by constantly measuring the amount of tubular material which is actually required with the given amount for filling a sausage, as a result of fluctuations in diameter and/or elasticity of the tubular material.

6. A process according to one of claims 1 to 5 characterised in that the length of the tubular portions, when they are drawn from the supply roll, and/or the length of the tubular material which is drawn off the filling tube, are measured by machine counting of material discontinuities disposed at regular lengthwise spacings on the tubular material.

7. A process according to claim 6 characterised in that measurement is effected in a contact-less manner.

8. A process according to one of the preceding claims characterised in that the tubular material which is drawn off the supply roll is continuously monitored for the occurrence of an adhesive join location and that the bunching operation is automatically terminated and the bunched tubular portion is cut off and brought into position in front of the meat discharge of the filling machine before the adhesive join location has passed into the region of the bunching.

9. A process according to claim 8 characterised in that the operation of drawing off and bunching the tubular material from the supply roll is automatically continued after the tubular portion which has been cut off in front of the adhesive join location has been brought into position in front of the meat discharge of the filling machine and that the bunching operation is again terminated and the tubular material is again cut off when the adhesive join location has passed the cut-off station, whereupon the tubular portion containing the adhesive join location is separated out and the process is continued with the following tubular material in the normal fashion.

10. A process according to claim 8 or claim 9 characterised in that monitoring for the adhesive join location is effected at a spacing from the cut-off station, which is greater than the tube length required for the given amount for filling a sausage, and that the bunching operation is terminated and the bunched material is cut off and moved into a position in front of the meat discharge of the filling machine as soon as the maximum integral multiple of the tube length required for a given amount for filling a sausage with a given tubular diameter is reached before the adhesive join location passes into the bunching region.

11. An arrangement for carrying out the process according to one of the preceding claims comprising a holder for rotatably mounting a tubular material supply roll, a means for axially bunching in a portion-wise manner the tubular material which comes from the supply roll, a means for cutting off the bunched tubular portions from the unbunched strand of material, a means for transferring the bunched and cut-off tubular portions to the meat discharge of a sausage filling machine having at least one filling tube for receiving a bunched tubular portion, a skin braking means which is operative in the filling operation, a means which is disposed in front of the end of the filling tube for dividing and closing the tubular material which is filled in a portion-wise manner with meat by the filling machine, and control and interlocking means for programmed sequential control of the individual means, characterised by a first measuring means for continuously measuring the length of a tubular portion which is drawn from the supply roll during the bunching operation, a second measuring means for continuously measuring the length of the tubular material which is drawn in the filling operation from the filling tube by the skin braking means, a storage means which stores the final length, as determined by the first measuring means, of each bunched and cut-off tubular portion, a comparison means which continuously compares the measurement values obtained during operation by the second measuring means with the stored final length of the same tubular portion, and a computer which from the comparison computes the material length still remaining available on the filling tube and in dependence thereon actuates the control and interlock means.

12. An arrangement according to claim 11 characterised in that the computer can be programmad in regard to the number of sausages to be filled with a given amount of meat and a bunched tubular portion and from the measurement values of the second measuring means and the control pulse spacing of the filling machine or the setting means determines the amount of material to be bunched, in the measurement of which by the first measuring means the bunching operation is switched off and the bunched portion is cut off and brought into a position in front of the meat discharge of the filling machine.

13. An arrangement according to claim 11 or claim 12 characterised in that the two length measuring means include measurement value converters for converting the measured lengths of material into counting pulses.

14. An arrangement according to claim 13 characterised in that the two measurement value converters are provided with sensing rollers for frictional entrainment by the tubular material.

15. An arrangement according to claim 11 or claim 12 characterised in that at least one of the two length measuring means includes a sensor for detecting material discontinuities in the tubular material passing therethrough, and a counter for counting same.

16. An arrangement according to claim 15 characterised in that the sensor is arranged with an intermediate spacing relative to the tubular material.

17. An arrangement according to claim 15 or claim 18 characterised in that the sensor is a photocell which is tuned to given material discontinuities having an Optical effect.

18. An arrangement according to one of claims 11 to 17 characterised in that the comparison means and the computer are components of a microcomputer.

19. An arrangement according to one of the preceding claims characterised in that the measuring means for measuring the material drawn off at the filling tube is arranged between the skin braking means and a retaining element spaced in relation thereto for the bunching folds of the tubular material disposed on the filling tube.

20. An arrangement according to claim 19 characterised in that when a fresh bunched portion of tubular material is brought into a position in front of the meat discharge of the filling machine the retaining element and the measuring means for the material drawn off, together with the skin braking means, can be temporarily moved away from the filling tube.

21. An arrangement according to one of claims 11 to 20 characterised by two adhesive join location monitoring means which are connected to the computer, one thereof being arranged upstream and the other directly downstream of the cut-off means.

22. An arrangement according to claim 21 characterised in that the first adhesive join location monitoring means is disposed at a spacing upstream of the cut-off means which is greater than the greatest length of sausage to be produced with the arrangement.

23. An arrangement according to claim 21 or claim 22 characterised in that the adhesive join location monitoring means are formed as photoelectric measuring means.

24. An arrangement according to claim 21 or claim 22 characterised in that the adhesive join location monitoring means are formed as capacitive measuring means.

**Revendications**

1. Procédé de fabrication automatique de saucisses en cordon sur une machine de remplissage de saucisses utilisant du boyau pour les gaines des saucisses, qui est tout d'abord désoule, froncé axialement et coupe par troncons de très grandes longueurs à partir d'une bobine d'alimentation, à côte de la machine de remplissage, chaque troncon de ce genre étant ensuite transféré jusqu'à la sortie de chair à saucisse de la machine de remplissage et rempli à l'aide d'un tube de remplissage par portions de chair à saucisse, séparé et fermé alors que son extraction est ralentie, caractérisé en ce que, pendant l'opération de froncage, la longueur du troncon de boyau est mesurée en continu alors qu'il est déroulé de la bobine d'alimentation et la longueur finale du troncon froncé et coupé est mise en mémoire, qu'en outre la longueur de boyau enlevée du tube de remplissage pendant le remplissage est mesurée en continu et comparée à la longueur du même troncon de boyau mise en mémoire, et que le remplissage, la séparation et la fermeture sont interrompus en fonction de cette comparaison.

2. Procédé selon la revendication 1, caractérisé en ce que la longueur du boyau deroule de la bobine d'alimentation pendant le froncage est comparée en continu avec une longueur de troncon donnée, qui est au moins determinée approximativement de telle manière qu'elle corresponde à un multiple d'ordre pair de la longueur de boyau nécessaire pour un volume de remplissage déterminé d'une saucisse compte tenu d'un calibre de saucisse détermine.

3. Procédé selon la revendication 2, caractérisé en ce que le remplissage, le rétrécissement et la fermeture sont interrompus lorsque la comparaison entre le boyau enlevé du tube de remplissage et la longueur de troncon de boyau froncé montre que le reste de matériau disponible sur le tube de remplissage est insuffisant pour un nouveau remplissage de la quantité déterminée.

4. Procédé selon la revendications 2, caractérisé en ce que le volume pour le dernier remplissage de chaque troncon de boyau est réduit en fonction de la longueur restante de boyau sur le tube de remplissage résultant de la comparaison.

5. Procédé selon l'une des revendications 2 à 4, caractrisé en ce que la longueur de troncon donnée pour le froncage est corrigée en continu en mesurant constamment la quantité de boyau effectivement nécessaire pour un volumule de remplissage déterminé d'une saucisse résultant des variations de calibrage et/ou d'élasticité de matériau du boyau.

6. Procédé selon l'une des revendications 1 à 5, caractérisé en ce que la longueur des troncons de boyau déroulée de la bobine d'alimentation et/ou la longueur du boyau enlevée du tube de remplissage sont mesurées par comptage mécanique des discontinuités de matière disposées à des intervalles réguliers dans le sens longitudinal sur le boyau.

7. Procédé selon la revendication 6, caractérisé en ce que l'opération de mesure est une mesure sans contact.

8. Procédé selon l'une des revendications précédentes, caractérisé en ce que le boyau déroulé de la bobine d'alimentation est contrôlé en permanente en vue de détecter la présence d'un point de collage et que l'opération de froncage est arrétée automatiquement, le troncon de boyau froncé est coupé et transféré devant la sortie de chair à saucisse de la machine de remplissage avant que le point de collage ne soit parvenu dans la zone de froncage.

9. Procédé selon la revendication 8, caractérisé en ce que le déroulement et le froncage du boyau de la bobine d'alimentation sont poursuivis automatiquement lorsque le troncon de boyau coupé en amont du point de collage aura été transféré devant la sortie de chair à saucisse de la machine de remplissage et que le processus de froncage est de nouveau arrété et le boyau de nouveau coupé, lorsque le point de collage aura passé le poste de coupe, le troncon de boyau présentant le point de collage étant ensuite éliminé et le procédé étant normalement poursuivi avec du matériau consécutif.

10. Procédé selon la revendication 8 ou 9, caractérisé en ce que la détection du point de collage est effectuée à une distance du poste de coupe qui est supérieure à la longueur nécessaire pour le volume de remplissage déterminé d'une saucisse, et que l'opération de froncage est arrétée, le matériau froncé est coupé et transféré devant la sortie de chair à saucisse de la machine de remplissage dès que la longueur de boyau nécessaire pour une quantité de remplissage déterminée d'une saucisse, compte tenu d'un calibre de boyau donne, atteint le plus grand multiple entier possible avant que le point de collage ne parvienne das la zone de froncage.

11. Dispositif pour la mise en oeuvre du procédé selon l'une des revendications précédentes, comprenant un support pour le logement mobile en rotation d'une bobine d'alimentation de boyau, un dispositif pour le froncage axial par troncons du boyau déroulé de la bobine d'alimentation, un dispositif destiné à séparer les troncons de boyau froncés du matériau continu non froncé, un dispositif pour transférer les troncons de boyau froncés et coupés jusqu'à la sortie de chair à saucisse d'une machine de remplissage comportant au moins un tube de remplissage susceptible de recevoir un troncon de boyau froncé et frein de boyau agissant pendant le remplissage, un dispositif situé devant l'extrémité du tube de remplissage pour séparer et fermer le boyau rempli de chair à saucisse par portions ainsi que des moyens de commande et de verrouillage pour une commande séquentielle programmée des différents dispositifs, caractérisé par un premier dispositif de mesure destiné à mesurer en continu la longeur d'un troncon de boyau déroulé de lla bobine d'alimentation pendant le froncae, un deuxième dispositif de mesure destiné à mesurer en continu la longeur du boyau enlevée par le frein de boyau pendant le remplissage par le tube de remplissage, un dispositif de mémorisation la longeur finale de chacun des troncons de boyau froncés et coupés, qui a été déterminée par le premier dispositif de mesure, un comparateur qui compare en continu les valeurs de mesure déterminées pendant la transformaton par le deuxième dispositif de mesure avec la longeur finale mémorisée du même troncon de boyau ainsi que par un calculateur qui calcule à partir de la comparaison la longeur du matériau restant à disposition sur le tube de remplissage et commande en fonction du résultat les moyens de commande et de verrouillage.

12. Dispositif selon la revendication 11, caractériséen ce que le calculateur est programmable en fonction du nombre de saucisses à remplir avec une quantité déterminée de chair à saucisse et un troncon de boyau froncé et détermine la quantité de matériau à froncer à partir des valeurs de mesure du deuxième dispositif de mesure et de l'intervalle des impulsions de commande de la machine de remplissage et/ou du dispositif de pose des agrafes,que pendant leur mesure par le premier dispositif de mesure le processus de froncage est arrêté, le troncon froncé est séparé et amené devant la sortie de chair à saucisse de la machine de remplissage.

13. Dispositif selon la revendication 11 ou 12, caractérisé en ce que les deux dispositifs de mesure de la longueur comportent des convertisseurs de signaux chargés de convertir les longueurs de matériau mesurées en impulsions de comptage.

14. Dispositif selon la revendication 13, caractérisé en ce que les deux convertisseurs de signaux sont munis de rouleaux de contact entralnés par adhérence par le boyau.

15. Dispositif selon la revendication 11 ou 12, caractérisé en ce que au moins l'un des deux despositifs de mesure de la longueur comprend un capteur détectant des discontinuités de matière sur le boyau en défilement ainsi qu'un compteur chargé de les compter.

16. Dispositif selon la revendication 15, caractérisé en ce que le capteur est monté à distance du boyau.

17. Dispositif selon la revendication 16 ou 16, caractérisé en ce que le capteur est constitué par une cellule photo-électrique adaptée à des discontinuités de matière déterminées agissant sur les moyens optiques.

18. Dispositif selon l'une des revendications 11 à 17, caractérisé en ce que le comparateur et le calculateur sont partie intégrante d'un micro-ordinateur.

19. Dispositif selon l'une des revendications précédentes, caractérisé en ce que le dispositif de mesure destiné à mesurer le matériau enlevé du tube de remplissage est disposé entre le frein de boyau et un élément de retenue monté à distance de ce dernier pour les plis du boyau se trouvant sur le tube de remplissage.

20. Dispositif selon la revendication 19, caractérisé en ce que l'élément de retenue et le dispositif destiné à mesurer le boyau enlevé peuvent être provisoirement éloignés avec le frein de boyau du tube de remplissage pour amener un nouveau troncon de boyau froncé devant la sortie de chair à saucisse de la machine de remplissage.

21. Dispositif selon l'une des revendications 11 à 20, caractérisé en ce que deux dispositifs de détection des points de collage sont reliés au calculateur, l'un étant disposé en amont et l'autre immédiatement en aval du dispositif de coupe.

22. Dispositif selon la revendication 21, caractérisé en ce que le premier dispositif de détection des points de collage est monté à distance avant le dispositif de coupe, cette distance étant supérieure à la plus grande longueur de saucisse à fabriquer à l'aide du dispositif.

23. Dispositif selon la revendication 21 ou 22, caractérisé en ce que les dispositifs de détection des points de collage sont constitués par des équipements de mesure photo-électriques.

24. Dispositif selon la revendication 21 ou 22, caractérisé en ce que les dispositifs de détection des points de collage sont constitués par des équipements de mesure capacitive.